# EUROPEAN PATENT APPLICATION

(11) **EP 1 122 672 A2**
(43) Date of publication of application: **08.08.2001**
(21) Application number: 01200385.1
(22) Date of filing: 02.02.2001
(51) Int. Cl.: G06F 17/60

(54) **Method and system for calendar and personal information management**

(30) Priority: 04.02.2000 US 498516
(71) Applicant: Palm Inc., Santa Clara, CA 95052 (US)
(72) Inventor: Parker, Leo, Charlestown, MA 02129 (US); Arsenault, Greg, Acton, MA 01720 (US); Connelly, Charles, Brighton, MA 02135 (US); Fishman, Daniel, Medford, MA 02155 (US); Graziano, Alexander A. Jr., East Bridgewater, MA 02333 (US); Umansky, Vladimir, Newton, MA 02459 (US)
(74) Representative: Froud, Clive

(57) **Abstract**

The invention provides a system and method for calendar and personal information management. A user may establish an event using an invitation by selecting an invitation template and providing the content of the invitation. The personal information management system will store the invitation template and content, create the invitation and send the invitation to a set of invitees. The personal infomration management system may also be used to conduct a survey by creating a survey using content, including a set of questions, specified by a user, sending the survey to a set of invitees and receiving a response from at least one invitee. A merged calendar may be created using a base calendar and a first candidate calendar from the personal information management system.

## Description

### Technical Field

The present invention relates to systems and methods for providing a personal information manager ("PIM") and calendar, including over computer networks, in particular, the Internet.

### Background Art

Calendars and personal information managers ("PIM") are well known in the prior art. A PIM is a type of software application which is designed to help users organize information such as, for example, dates, lists, reminders and contacts. There are many different types of PIM hardware and software products as well as various calendar software and hardware applications available in the prior art such as Groupwise® by Novell and Lotus Notes® by Lotus Development Corporation. Many PIMs include calendars and calculator programs. Many of the calendars and PIMS available are implemented as a software program on a personal computer or on a personal data apparatus (PDA), such as a hand held organizer.

### Summary of the Invention

In accordance with one aspect of the invention, a method for establishing an event using an invitation in a personal information management system implemented over a network includes selecting an invitation template from a set of invitation templates which includes at least one member. The invitation template may advantageously be one created by a user of the personal information management system. The user then provides the content of the invitation including details of the event. The invitation is sent to a set of invitees as specified by the user. In a preferred embodiment, the network is the Internet. In another embodiment, the invitations are sent to the invitees via E-mail over the Internet.

In accordance with another aspect of the invention, the personal information management system may be advantageously utilized to conduct a survey over a network. A user specifies the content of the survey which is stored in a digital storage medium. The survey is sent to a set of invitees. Responses from the invitees are received by the system and stored in a digital storage medium.

In a further embodiment, a method for creating a merged calendar using a base calendar and a first candidate calendar from a personal information management system implemented over a network, the base calendar including a first set of events and the first candidate calendar including a second set of events includes specifying a date range for the merged calendar. A set of qualifying events is identified from the second set of events where each qualifying event in the set of qualifying events occurs at least once within the specified date range. The set of qualifying events are then stored in a digital storage medium along with the first set of events of the base calendar. The method also includes generating a display for the merged calendar where the display contains the first set of events from the base calendar and the set of qualifying events from the first candidate calendar. In one embodiment, the second set of events includes a first and last occurrence for each event. The method may further include determining the set of qualifying events using the first and last occurrence for each event. In another embodiment, the time zones of each event in the set of qualifying events are normalized.

In yet another embodiment of the invention, a method for providing a published user calendar for viewing by a set of invitees in a personal information management system having a set of user calendars and implemented over a network includes selecting a user calendar having a set of events, specifying a date range for the published user calendar and determining a set of qualifying events from the set of events where each qualifying events in the set of qualifying events occurs at least once during the specified date range. The set of qualifying events are stored in a digital storage medium. The method further includes generating a display for the published user calendar where the published user calendar includes the set of qualifying events. In one embodiment, the method further includes generating a location address for the display of the published user calendar on the network and sending the location address to the set of invitees.

In another embodiment of the invention, a method for distributing a user calendar from a personal information management system having a set of user calendars and implemented over a network, the user calendar having a set of events includes specifying a date range for the distributed user calendar, specifying a distribution interval and determining a set of qualifying events from the set of events where each qualifying event in the set of qualifying events occurring at least once during the specified date range. The set of qualifying events and the specified distribution interval are stored in a digital storage medium. The method also includes distributing the user calendar including the set of qualifying events according to the distribution interval.

In accordance with yet another aspect of the invention, a system for accessing data for a personal information manager includes a remote computer, in communication with the network, the remote computer running a first process for accessing the personal information manager by a user. A host computer, in communication with the remote computer over the network, runs a process for implementing the personal information manager. A digital storage medium, in communication with the host computer, receives and stores data for the personal information manager. The system also includes a content server, in communication with the host computer and the digital storage medium, which retrieves and stores data from the digital storage medium for access by the host computer. The content server advantageously stores the data most frequently accessed by the user.

### Brief Description of the Drawings

The foregoing features of the invention will be more readily understood by reference to the following detailed description, taken with reference to the accompanying drawings, in which:
Figs. 1a and 1b are block diagrams of the architecture of a system for providing a calendar and personal information manager over a network in accordance with an embodiment of the invention.
Fig. 2 is a diagram illustrating a system for providing a calendar and personal information manager over a computer network in accordance with a further embodiment of the invention.
Fig. 3 illustrates the logical flow of the user registration process in accordance with the embodiment of Figs. 1a and 1b.
Figs. 4a-4d illustrate calendar views for a personal calendar in accordance with the embodiment of Figs. 1a and 1b.
Fig. 5 illustrates the logical flow of creating a group in accordance with an embodiment of the invention.
Fig. 6 illustrates an exemplary group home page in accordance with the embodiment of Figs. 1a and 1b.
Fig. 7 is a block diagram of the architecture of RSVP/survey subsystem of Fig. 1a in accordance with an embodiment of the invention.
Fig. 8 illustrates the logical flow of creating and sending an RSVP invitation in accordance with the embodiment of Fig. 7.
Figs. 9a-9g illustrate creating an invitation and event in accordance with the embodiment of Fig. 7.
Fig. 10 illustrates the logical flow of the conducting a survey in accordance with the embodiment of Fig.7.
Fig. 11 is a block diagram of the architecture of the merge calendar subsystem of Figs. 1a and 1b in accordance with an embodiment of the invention.
Fig. 12 illustrates the logical flow of creating a merged calendar in accordance with an embodiment of the invention.
Fig. 13 illustrates the logical flow of creating a published calendar in accordance with the embodiment of Figs. 1a and 1b.
Fig. 14 illustrates the logical flow of distributing a calendar in accordance with an embodiment of the invention.
Fig. 15 is a block diagram of a system for data access used for the embodiment of Figs. 1a and 1b and Fig. 2 in accordance with an embodiment of the invention.

### Detailed Description of Specific Embodiments

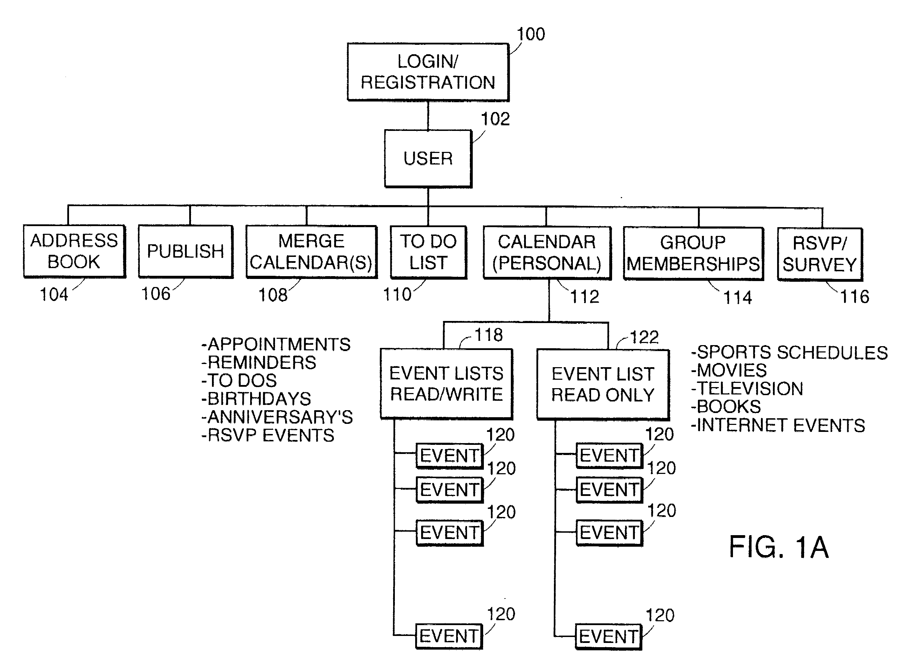

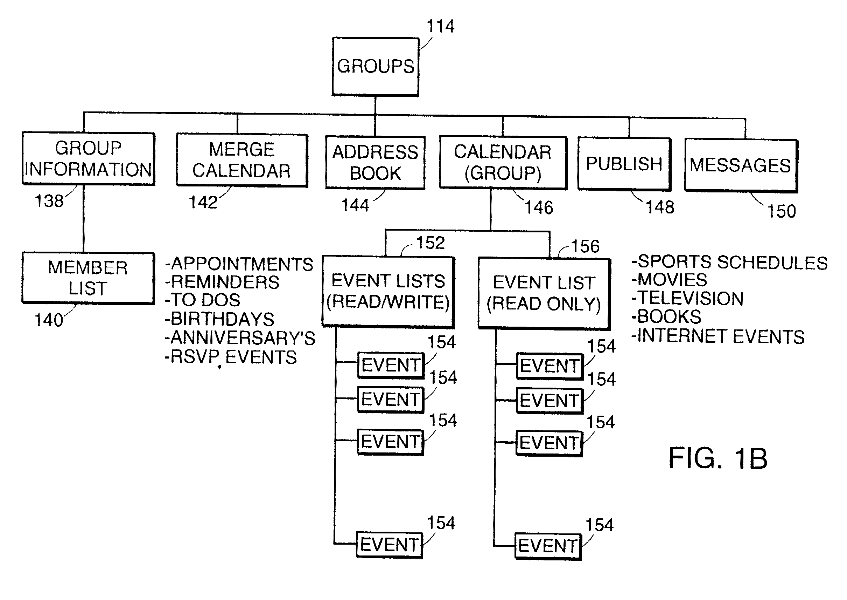

Figures 1a and 1b are block diagrams of a system for providing a personal information manager ("PIM") and a calendar over a network in accordance with an embodiment of the invention. The system allows a user to establish personal and group calendars as well as "to do" lists and address books. Each personal and group calendar contains information such as appointments, reminders, birthdays, events, etc.

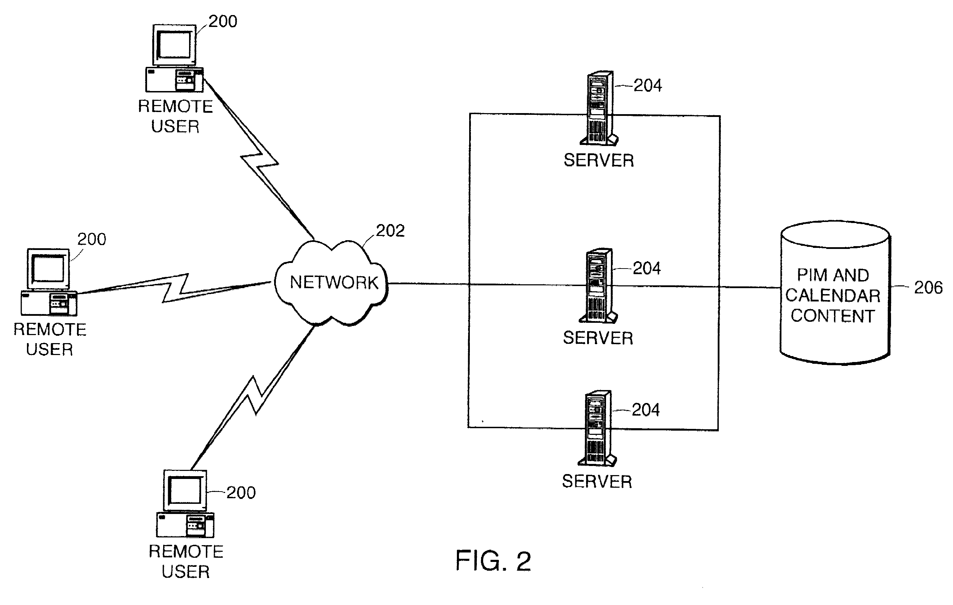

A user may access the system via a remote computer 200, as shown in Figure 2, which is in communication over a network 202 with a plurality of host computers 204. Multiple users 200 may access and communicate over the system. The host computers 204 may be implemented as servers and are in communication with a digital storage medium 206 which stores (among other things) the content of the PIM's and calendars for multiple users. The network 202 may be implemented as the Internet, in particular the World Wide Web. Accordingly, the personal information manager and calendars are made available via a site on the World Wide Web.

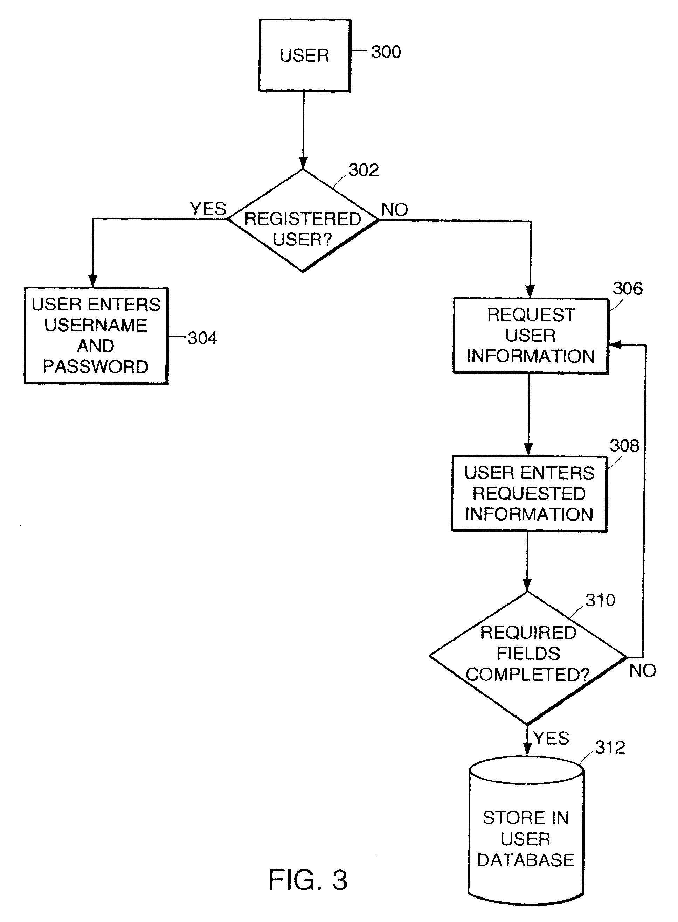

Returning to Figure 1a, when a user wishes to access the system, the user must login or register at block 100. The registration process is shown in more detail in Figure 3. At block 300, a user enters the system. In a preferred embodiment, the user will access the system via the World Wide Web. Accordingly, a user will be presented with the home page of a Web site at block 300. If the user is a registered user at block 302, then the user will enter their username and password at block 304 to access their calendar(s) and PIM information. If the user is not a registered user at block 302, the system begins a user registration process at block 306 by requesting registration information from the user. At block 308, the user will provide information such as name and E-mail address as well as a password and username chosen by the user. If all of the required fields are completed at block 310, then a user account including the information provided by the user is stored in a user database at item 312. If the required information is not provided at block 310, then the user registration process will prompt the user for the required information again at block 306.

Referring again to Figure 1a, once a user 102 is registered with the system, a personal calendar 112, event lists (118, 122), address book 104 and "to do" list 110 are automatically created for the user. A user may add, delete and edit items from the their personal calendar, events lists, address book and "to do" list.

Each registered user 102 has a personal calendar 112. A personal calendar is a calendar available only to a specific user and is private unless otherwise designated by the user. For example, a user may create a password that may be used by other users to view their personal calendar or the user may publish their calendar. A personal calendar contains information such as appointments, reminders, birthdays, events, etc. as created or chosen by the user. This information is stored in event lists (118, 122) which are associated with and linked to the user's personal calendar. Event lists contains a set of event records, where the set of event records contains at least one member. Each event record 120 in an event list describes an event, such as an appointment, and contains the first and last occurrence for the event. In this manner, the system is able to identify events that are recurring (e.g., a birthday or a monthly meeting) and those that occur only once.

An event list may be a read/write event list 118 or a read only event list 122. A read/write event list 118 contains events, such as appointments and reminders, which are created by the user and may be edited by the user. Event list 122 is a read only event list and contains predefined events provided by the system such as schedules for a sports team or movie listings. A user may select an individual event (i.e., a single game or concert), multiple events or the entire event schedule (i.e., an entire season schedule of games for a sports team) to include in their personal calendar.

As mentioned above, an address book 104 is also created when a user registers with the system. The address book may also be modified by the user. An address book contains address records which represent addresses and contacts as defined by the user. In addition, as shown in Figure 1a, a "to do" list 110 is created by the system for a registered user. The user can modify the "to do" list by adding or editing tasks in the "to do" list. Tasks in the "to do" list may also appear in the user's personal calendar.

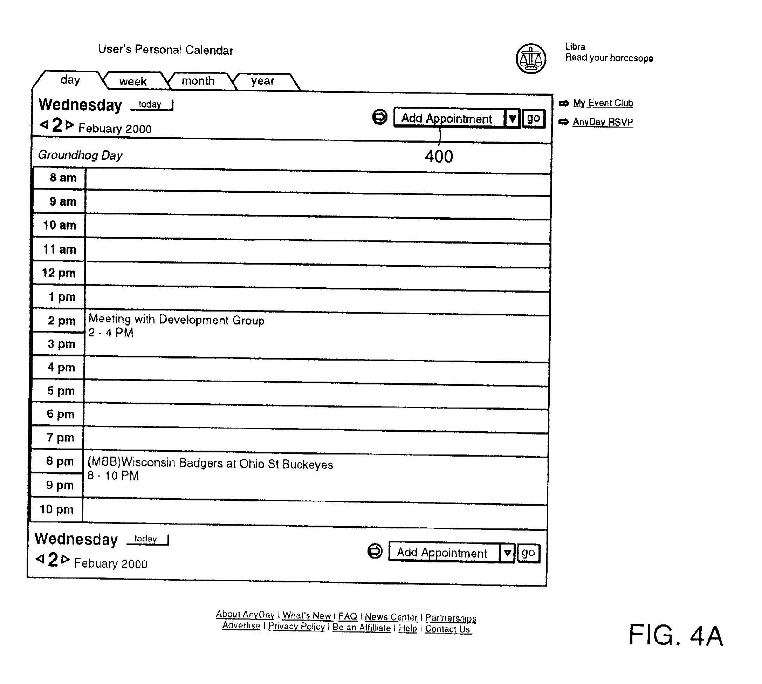

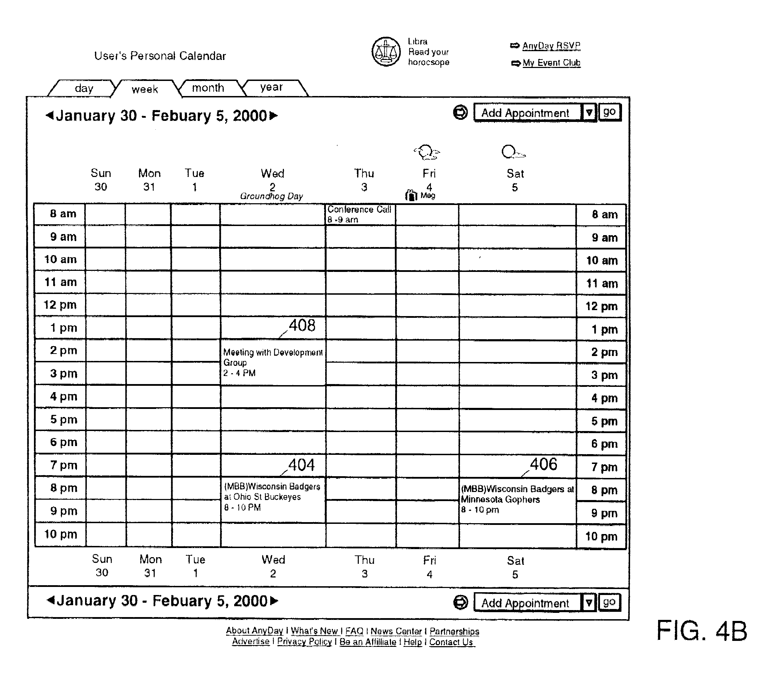

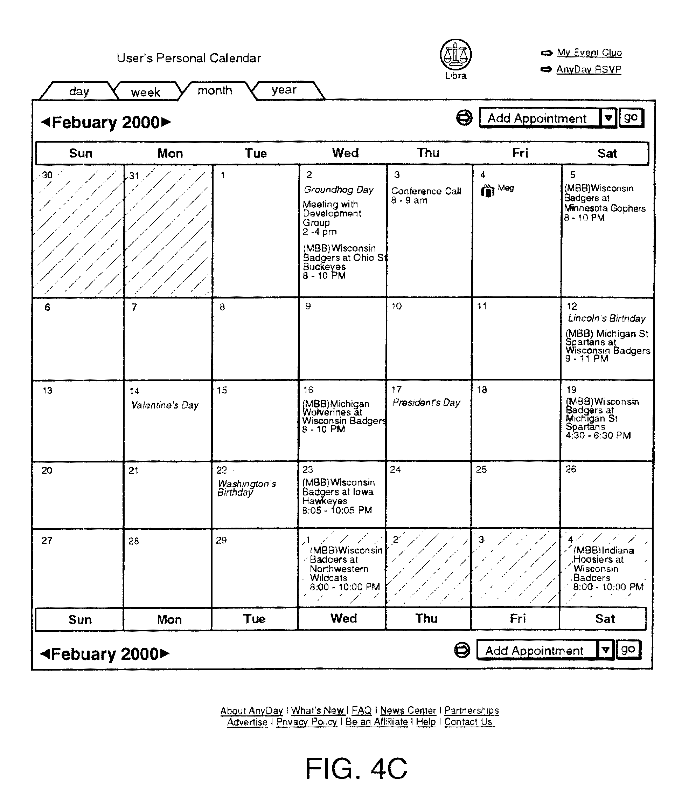

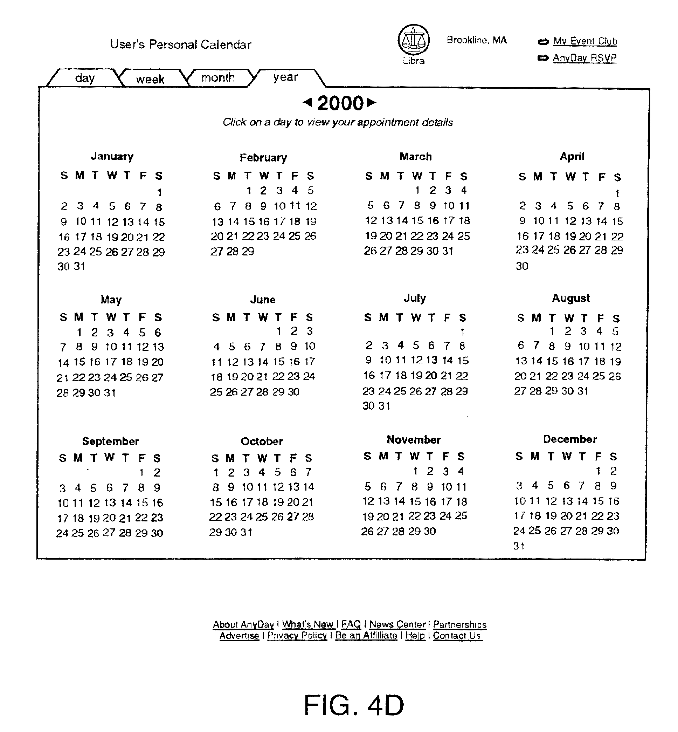

Figures 4a-4d illustrate exemplary calendar views for a personal calendar in accordance with an embodiment of the invention. Figure 4a is a daily calendar view. A pull down menu 400 allows a user to select and add an appointment, reminder, "to do" or other event. Figure 4b is a weekly calendar view. Events 404, 406 and 408 appear in blocked out time frames. The user may click on an event (404, 406, or 408) and view more details of the event. In addition the user may edit or delete events in a calendar view. Figure 4c is a monthly calendar view and Figure 4d is a yearly calendar view.

The system in Figure 1a also provides each user with the ability to create or join a group 114. Users may be associated with multiple groups, either by creating a group or by joining existing groups. Groups provide a user the ability to organize, categorize and share calendars, contacts and other information with other members of the group. Members of a group are also registered users of the system.

The structure of a group 114 is shown in more detail in Figure 1b. Each group 114 contains a group calendar 146, address list 144, messages 150 and group information 138. A group calendar 146 contains information for the members of the group such as appointments, reminders, events, etc. The group calendar 146 is associated with and linked to event lists (152, 156). As described above with respect to Figure 1a, an event list contains a set of event records. Each event record describes an event and contains the first and last occurrence for the event.

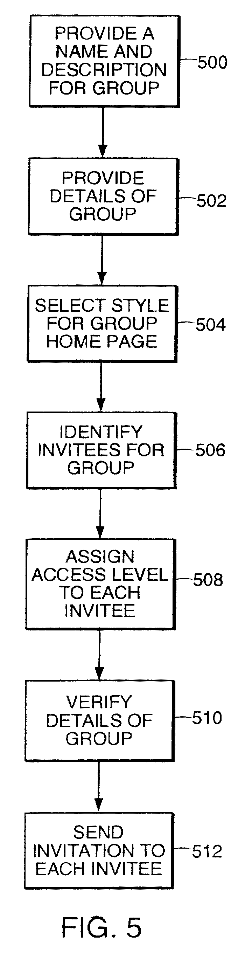

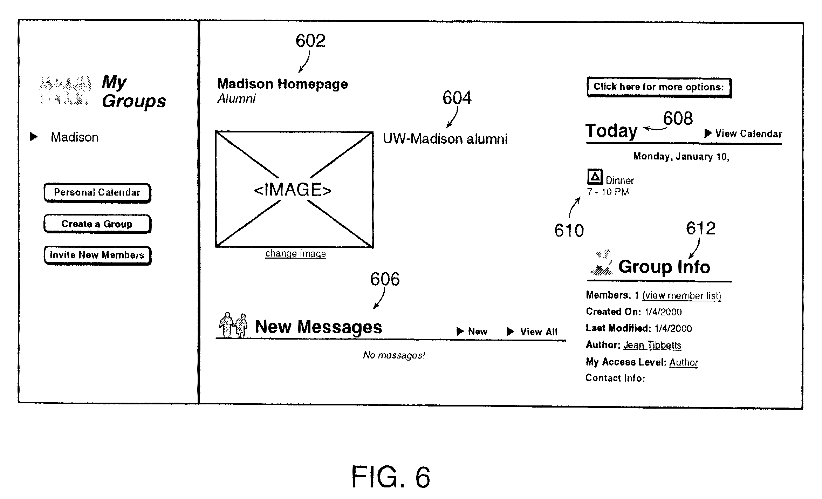

Figure 5 illustrates the logical flow of creating a group. Any user can create a number of groups. First, at block 500, the user (or "creator") provides a name and description for the group. Details which define the parameters of the group such as the type of group (public or private) and the time zone for the group calendar are provided by the creator at block 502. Next, the creator selects a style or template for a group home page at block 504. The home page is a page seen by all members of the group when they first enter the group area. The home page contains a group title, any photo(s), a group description, a message board for messages posted by members of the group, news and group information such as a member list 140 (See Figure 1b). Figure 6 illustrates an exemplary group home page including the title 602, group description 604, message board 606, a link to the group calendar 608, and group information 612. The home page also lists events for the current date 610.

Returning to Figure 5, at block 506, the creator of the group identifies the invitees who will be invited to become members of the group. Preferably, the creator will provide the E-mail address of each invitee. Each invitee is then assigned an access level at block 508. Depending on their access level, group members may modify, add or delete items in the group's calendar, address book, etc. The creator of the group may modify items and events in the group calendar, delete the group, delete members of the group, change the access privileges of member of the group, and change the layout and content of the group home page. Preferably, there are three access levels for group members: viewer, contributor and editor. A viewer may view group calendar entries, invite new members to the group and create messages. A contributor may view calendar entries, create calendar entries, modify their own calendar entries, invite new members and create messages. An editor may view calendar entries, create calendar entries, modify all calendar entries, invite new members, delete group members and create messages.

Once the access levels have been assigned to each invitee at block 508, the creator verifies the details of the group at block 510. Then, invitations are sent to each invitee at block 512. Preferably, the invitations are sent via E-mail over the Internet. The E-mail messages include a link (e.g., a URL address) that allows the invitee to enter a page with the group description as well as registration and login options. If the invitee accepts membership in the group and is already a registered user of the system, the invitee will enter their username and password to access the group home page. If the invitee accepts membership in the group and is not a registered user of the system, the invitee will be taken through the registration process as described above with respect to Figure 3.

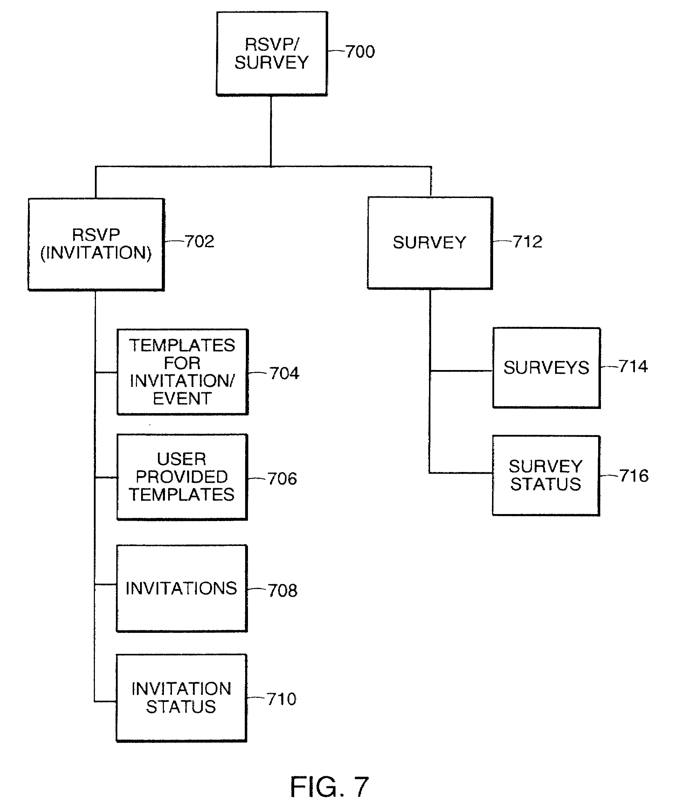

Returning to Figure 1a, the system allows a user 102 to create an event (such as a party) and invite others to attend or participate using the RSVP/survey subsystem 116. The RSVP/survey subsystem 116 permits a user to invite other users as well as non-users to an event. The RSVP/survey subsystem 116 also allows a user to create and distribute a survey to other users and non-users. Figure 7 is a block diagram of the architecture of the RSVP/survey subsystem in accordance with an embodiment of the invention. A user (or "organizer") may use the RSVP/survey subsystem to either create an event and invitation 702 or to create and distribute a survey 712.

An invitation 702 may advantageously be created using templates provided by the system 704 or using templates created by the user 706. The templates define the appearance and style of the invitation. Preferably, the organizer may create their own template and upload the template into the system where it may be stored. A user created template may be available for the use of only the user who created it or for public use by all the users of the system. The status of the responses to the invitations sent by the organizer are also stored by the system in a status database 710. The system tracks whether an invitee has responded as well as the response given by the invitee (i.e., yes or no). Events created by using the RSVP/survey subsystem may be added to the organizer's personal calendar as well as to the personal calendar's of the invitees who accept the invitation.

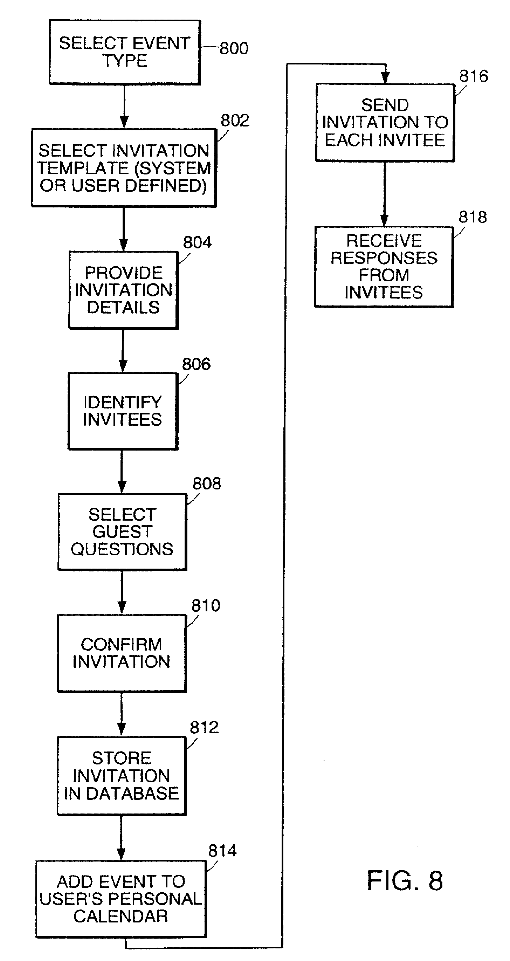

Figure 8 illustrates the logical flow of creating and sending an RSVP invitation. At block 800, the user (or "organizer") selects the type of event, for example, holiday, business, birthday, etc. Then the organizer will select a template for the invitation which will define the invitations appearance at block 802. As described above, the template may advantageously be either one predefined by the system or one created by the user and uploaded into the system. This allows greater flexibility and selection for a user. Templates created by a user may be available only the user themself (private) or to all of the users of the system (public). At block 804, the organizer provides the details (or content) defining the parameters of the event such as what, when and where. The organizer will then identify the invitees to the event at block 806. Preferably, the organizer provides the E-mail address of each invitee. At block 808, the organizer may also elect to include questions in the invitation to obtain additional information and feedback from the invitees, such as, for example, time of arrival or food and drink preferences. Next, the organizer confirms the invitation template and details at block 810. Once the invitation is confirmed, it is stored in a database at block 812 so that the invitation may be viewed and edited by the organizer. The event is also added to the organizer's personal calendar at block 814. The invitations are then sent to each of the invites at block 816. Preferably, the invitations are sent via E-mail over the Internet. The E-mail messages may include a link (e.g, a URL address) which allows the invitee to access a Web page showing the invitation created by the organizer. The invitation accessed by the invitee contains an accept option and a decline option. If the invitee is a registered user and accepts the invitation, the invitee may add the event to their personal calendar. The system receives and tracks the responses from the invitees at block 818.

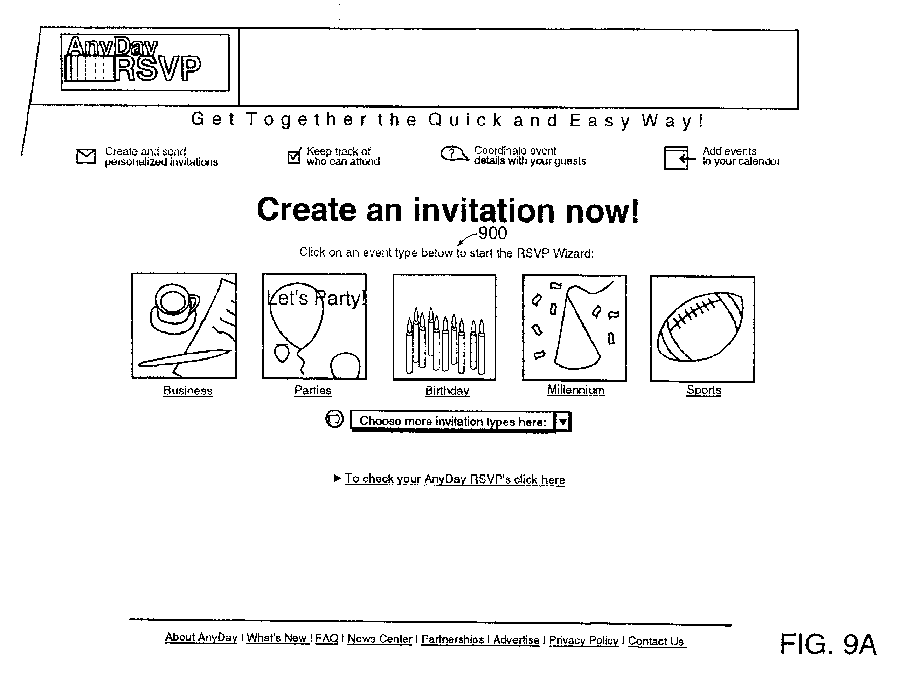

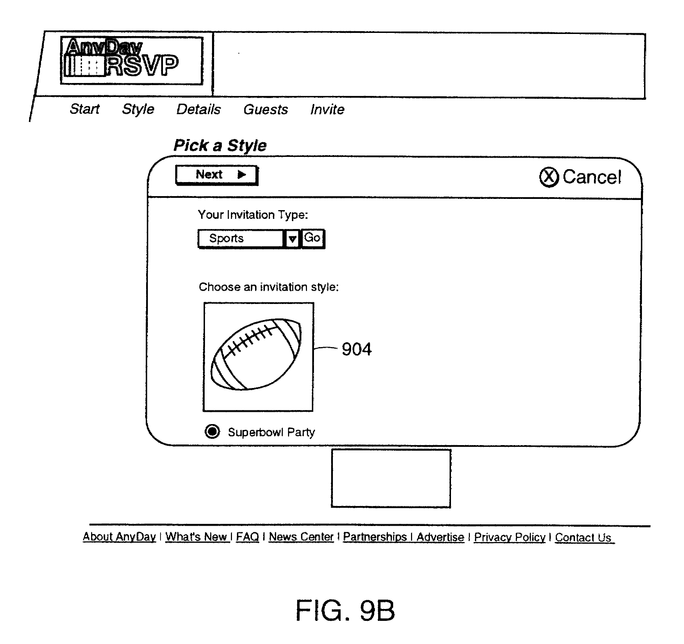

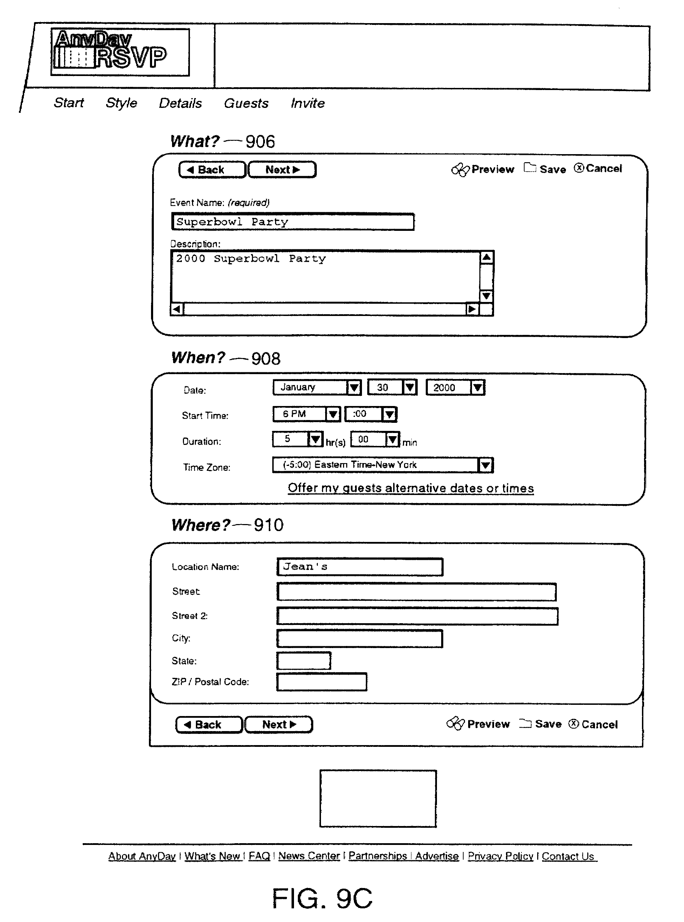

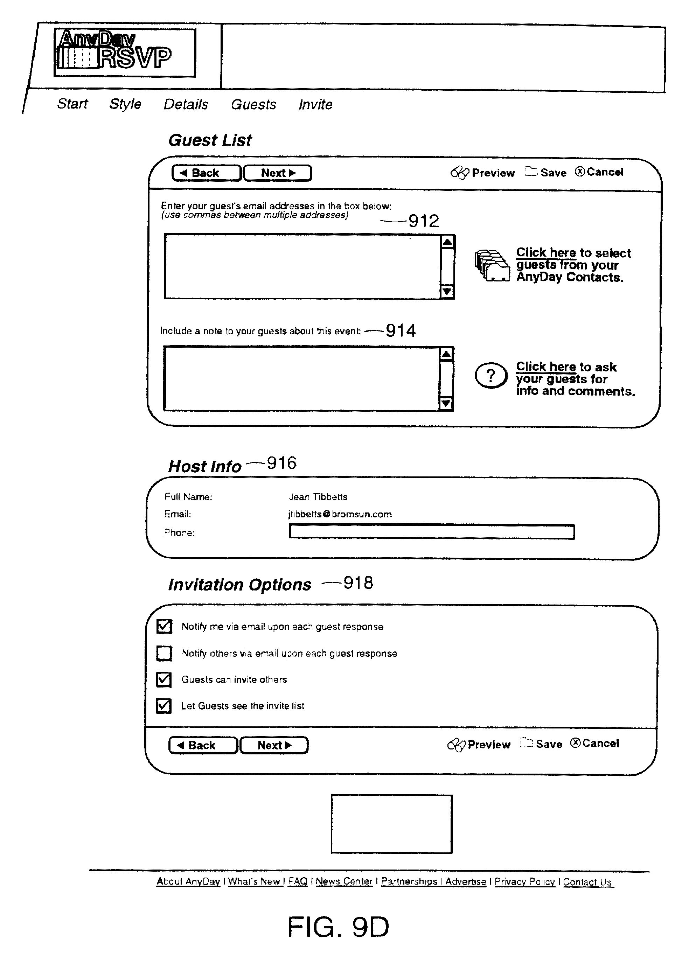

Figure 9a-9g illustrate creating an invitation in accordance with Figures 7 and 8. The user interface shown in Figures 9a-9g is discussed by way of example only, and without limitation of the scope of any of the appended claims. Figure 9a illustrates the selection of the event type 900, for example, business, party, sports, etc. In Figure 9b, the organizer is selects a template 904 for their invitation which corresponds to the event type selected by the organizer. As described above, the template may advantageously be one created by the organizer. The details of the event and invitation are provided as shown in Figure 9c. For example, the user will provide details of the event such as what 906 (e.g., an event name and description), when 908 (e.g., the date, start time and duration of the event) and where 910 (e.g., a location and address). A guest list is provided by the organizer, where each guest (or invitee) may be identified by their E-mail address 912 as shown in Figure 9d. The organizer may also include a brief message 914 to the invitees as well as additional information regarding the organizer (host) 916. The organizer may also select various options 918 such as receiving notification of each invitees response to the invitation or allowing each invitee to invite others.

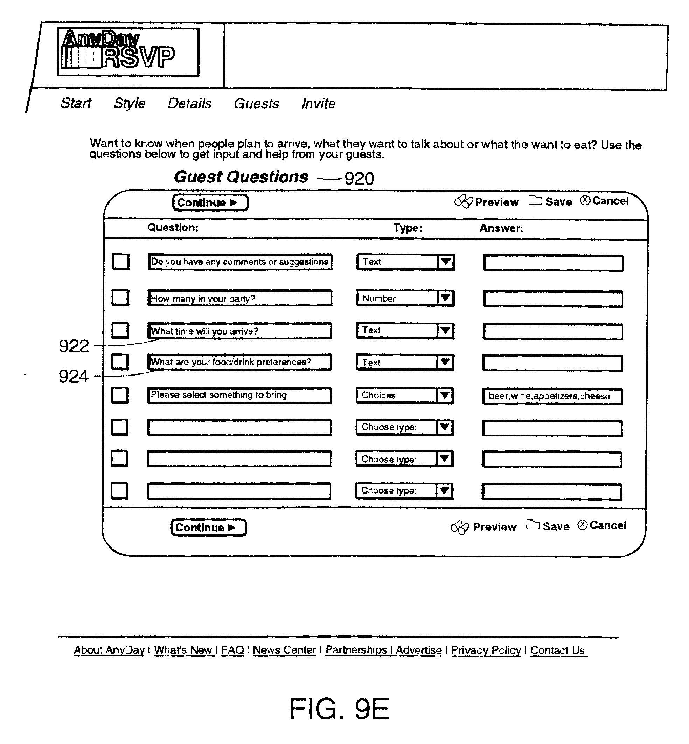

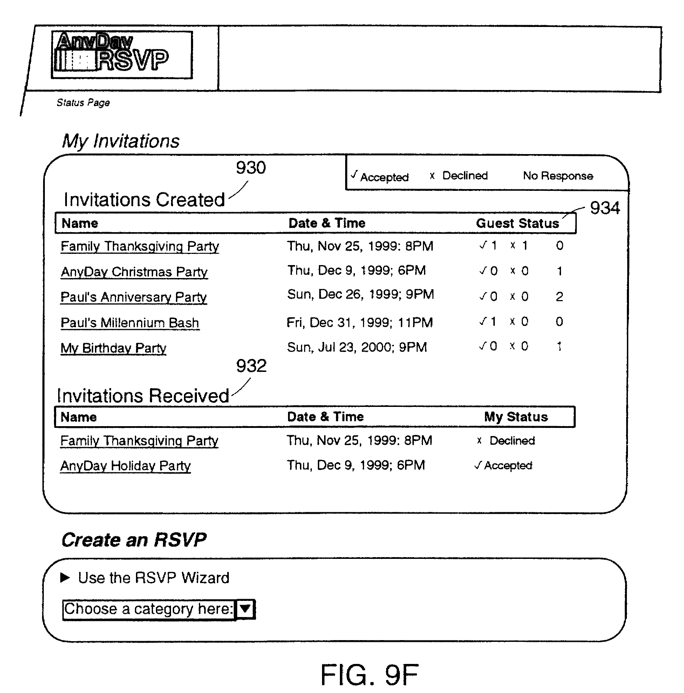

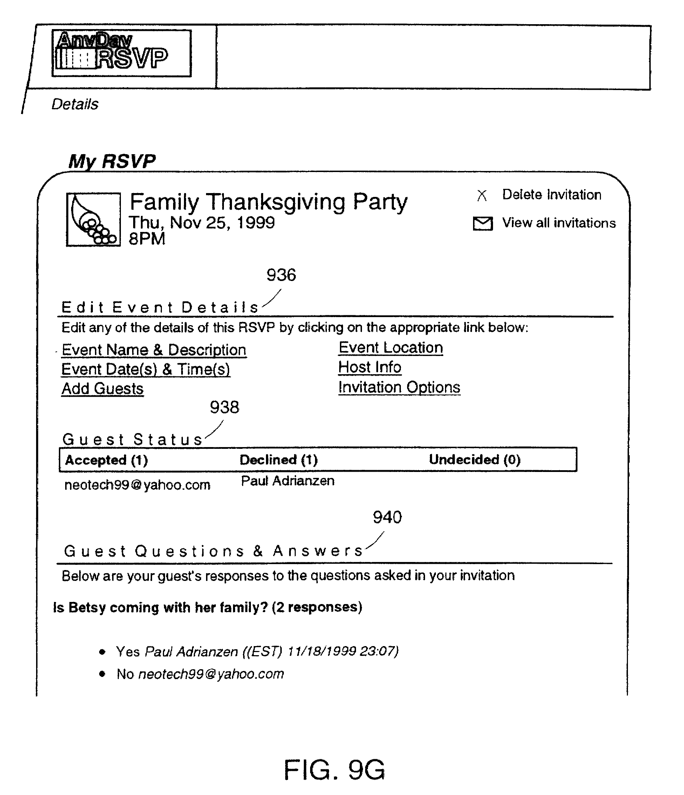

Figure 9e shows a set of optional questions 920 for the invitees which may be included with the invitation. For example, the organizer (host) may want to know the invitees time of arrival 922 or food and drink preferences 924. Figure 9f illustrates the status of invitations either created 930 or received 932 by the organizer. The system tracks the status of the responses to the invitation 934, for example, whether an invitee has responded and what response was given by the invitee (e.g., accepted or declined). An organizer may also edit the invitation and view the details of the status of each guest as shown in Figure 9g. The event details may be edited 936 and then any updates may be distributed to the invitees via an E-mail over the Internet. Figure 9g also shows the status of each guest 938 as well as the responses to any question 940 included in the invitation.

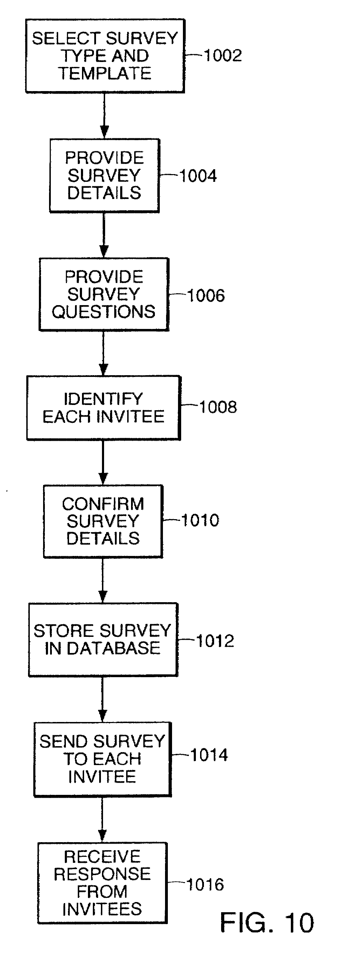

Returning to Figure 7, the RSVP/survey subsystem 700 may also be advantageously utilized to conduct a survey 712. Figure 10 illustrates the logical flow of conducting a survey in accordance with the embodiment of Figure 7. Similar to the invitation process, a user may select the type of survey and template for the survey at block 1002. The user will then provide the details defining the parameters of the survey such as the purpose of the survey and a brief description of the survey at block 1004. The user then selects a number of questions to be included in the survey at block 1006. The questions may either be predefined by the system or created by the user. At block 1008, each invitee is identified, preferably using each invitee's E-mail address. The user will confirm the details and appearance of the survey at block 1010 and the survey will then be stored by the system in a database at block 1012 so that the survey may be viewed and edited by the user. Each invitee is then sent the survey at block 1014. Preferably, each survey is sent via E-mail over the Internet. The E-mail message may include a link (e.g., URL address) which allows the invitee to view a Web page which includes the survey. The system will then receive and automatically track the responses provided by the invites at block 1016.

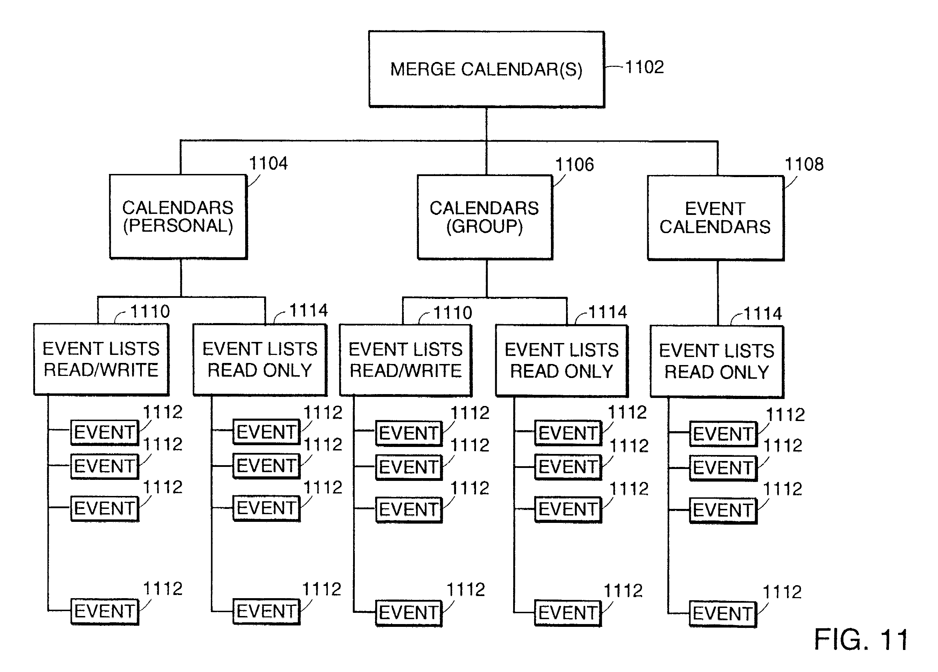

Returning to Figures 1a and 1b, the system advantageously allows a user to merge multiple calendars into a single merged calendar view containing all the events in each calendar or a subset of the events in each calendar using a merge calendar(s) subsystem (108,142). A user may merge personal calendars, group calendars or event calendars (i.e., sports team schedules, television listings, etc.). A merged calendar advantageously allows a user to, for example, show events from their personal calendar as well as the calendar events for all the members of a group from a group calendar. Figure 11 is a block diagram of the architecture of the merge calendar(s) subsystem of Figs 1a and 1b in accordance with an embodiment of the invention. A user may merge the events of other personal calendars 1104, group calendars 1106 or event calendars 1108 into their own personal calendars. Alternatively, a user may select a group calendar for which they are a member and merge other personal calendars 1104, group calendars 1106 or event calendars 1108 into the selected group calendar. The resulting merged calendar view will contain the events of both calendars. As discussed above with respect to Figures 1a and 1b, personal calendars 1104, group calendars 1106 and event calendars 1108 are associated with and linked to event lists (1110, 1114) which include event records 1112. Each event record 1112 describes an event and includes the first and last occurrence for the event.

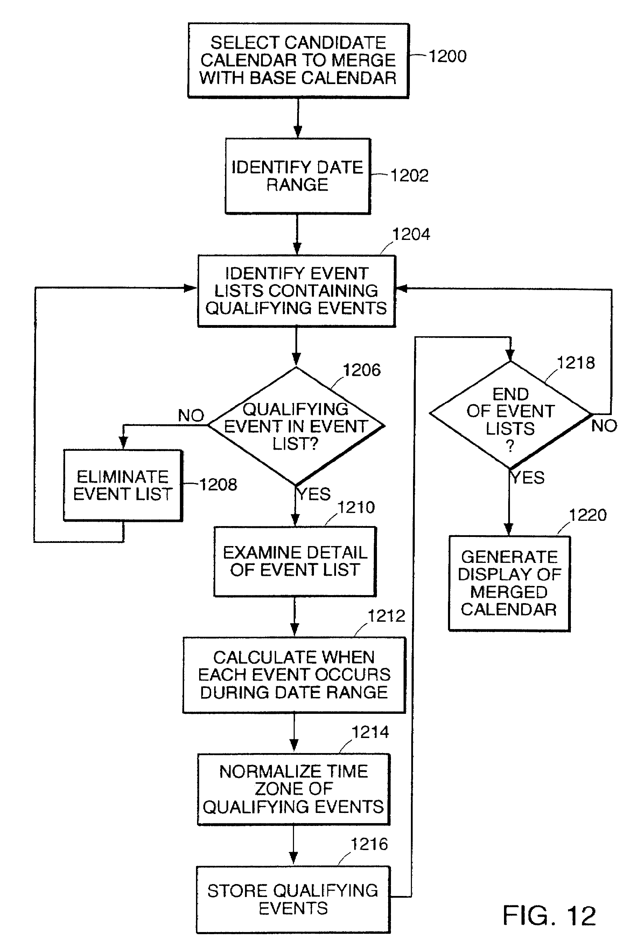

Figure 12 illustrates the logical flow of creating a merged calendar in accordance with an embodiment of the invention. A user may merge a calendar with their own personal calendar or a group calendar for which the user is a member. For the purposes of the following discussion and claims defined below, the calendar with which another calendar is merged will be called a base calendar. At block 1200, the user will select a candidate calendar to be merged with the base calendar. A user may select more than one candidate calendar. As discussed above with respect to Figure 11, the candidate calendar may be the personal calendar of another user (if the user creating the calendar has access privileges), a group calendar for which the user is a member or an event calendar. Once the user has selected a candidate calendar (or calendars) at block 1200, the user selects a date range for the merged calendar at block 1202. The date range determines the events from the candidate calendar which will be merged with the base calendar to create the merged calendar.

Events from the event lists associated with the candidate calendar which fall within the specified date range are identified at block 1204. Each event list associated with the candidate calendar is analyzed to determine if it contains at least one qualifying event (i.e., an event which has at least once occurrence during the specified date range). As discussed previously, each event record in an event list contains the first and last occurrence for the event. These dates are used to determine if an event qualifies to be included in the merged calendar.

If an event list does not contain at least one qualifying event at block 1206, then that event list is eliminated from consideration and the next event list associated with the candidate calendar is analyzed at block 1204. If an event list does contain at least one qualifying event at block 1206, the details of the qualifying events in the event list are examined at block 1210. At block 1212, the details of each qualifying event, in particular the last and first occurrence of the event, are used to calculate when the event occurs during the specified date range. The time zone of the qualifying events is normalized at block 1214. Typically, the time zone chosen is the time zone of the user creating the merged calendar, although the user could specify another time zone for the display of the merged calendar. The qualifying events are then stored in a database at block 1216.

If all the event lists associated with the candidate calendar have not been analyzed at block 1218, then the process, beginning at block 1204, continues with the next event list. If all of the event lists associated with the candidate calendar have been analyzed at block 1218, then a display for the merged calendar is generated at block 1220. The merged calendar display includes events from the base calendar and the candidate calendar(s). The events from the base calendar and the candidate calendar(s) may appear in different colors or fonts in the merged calendar. In another embodiment, the events form the candidate calendar may appear in the merged calendar in a free/busy format. In other words, instead of receiving the detail of the events, blocks of time which include an appointment, for example, are represented as "busy" while blocks of time which do not include an appointment or other event are represented as "free." This may be done, foe example, using different colors or merely the terms "free" and "busy".

Returning to Figures 1a and 1b, the system also advantageously permits a user to publish or distribute a calendar or portion of a calendar (106, 148). A user may publish a calendar so that both users and non-users of the system may view the calendar. In one embodiment, the published calendar appears on a World Wide Web page accessible via the World Wide Web. In addition, a user may distribute a calendar or portion of a calendar to him/herself or another individual at a specified interval using a variety of methods such as E-mail, voicemail, or facsimile.

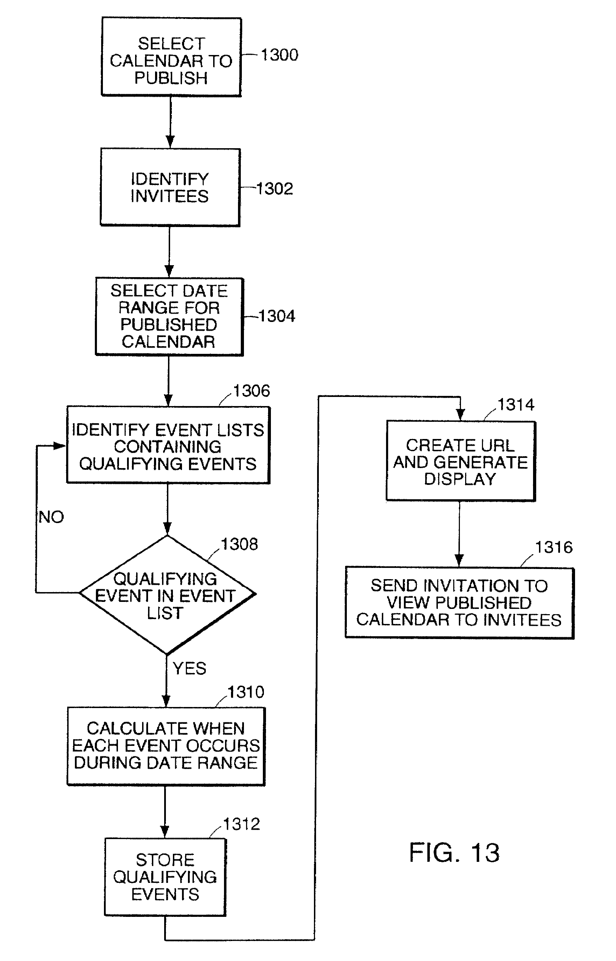

Figure 13 illustrates the logical flow of publishing a calendar. At block 1300, a user selects a calendar that they wish to publish. A user may publish their personal calendar or a group calendar for which they are a member. At block 1302, the user identifies the invitees who will receive invitations to view the published calendar. Preferably, the user provides an E-mail address for each invitee. The user then selects a date range for the published calendar at block 1304. The date range is used to determine the events which will be included in the published calendar.

Events from the event lists associated with the selected calendar which fall within the specified date range are identified at block 1306. As discussed above with respect to Figure 12, each event record in an event list contains the first and last occurrence for the event. The first and last occurrence of the event are used to determine if an event qualifies to be included in the published calendar.

If an event list does not include a qualifying event at block 1308, the process moves to the next event list associated with the selected calendar. If an event list does contain at least one qualifying event at block 1308, then the details of each qualifying event, in particular the first and last occurrence of the event, are used to calculate when each qualifying event occurs during the specified date range at block 1310. The qualifying events are then stored in a database at block 1312.

Once all the qualifying events for the published calendar are identified, a display for the published calendar is generated at block 1314 as well as an address or location for the published calendar. In one embodiment, the display of the published calendar may be in a free/busy format. In other words, instead of publishing the detail of the qualifying events, blocks of time which include an appointment, for example, are represented as "busy" while blocks of time which do not include an appointment or other event are represented as "free." This may be done, for example, using different colors or merely the terms "free" and "busy." Preferably, the published calendar appears on a World Wide Web page with an associated URL address. The location of the published calendar is then sent to the invitees. Preferably, the location of the published calendar is sent via an E-mail over the Internet. The E-mail address will include the URL address and a link for the Web page including the published calendar.

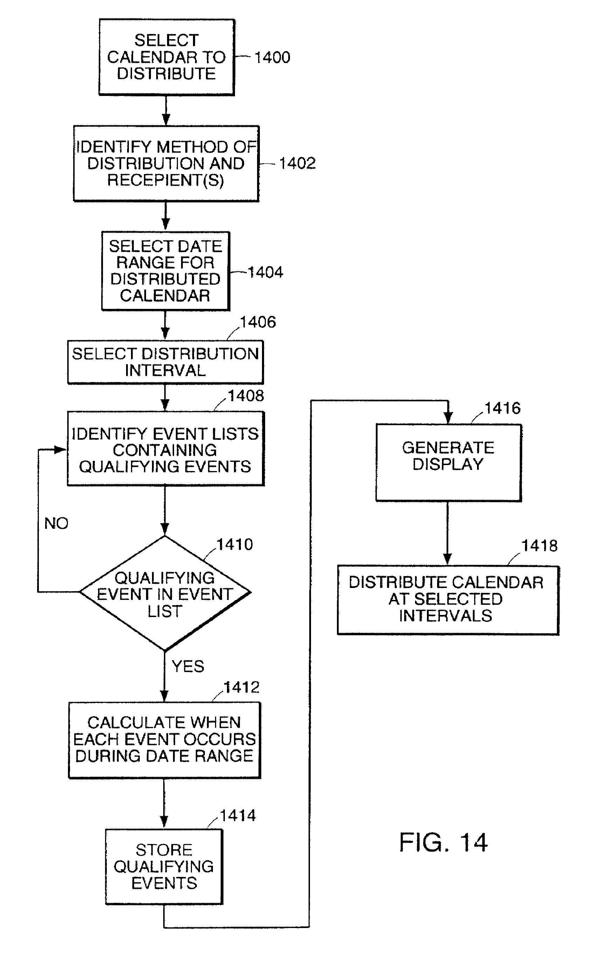

Figure 14 illustrates the logical flow of distributing a calendar in accordance with an embodiment of the invention. As mentioned above, the system of Figures 1a and 1b allow a user to distribute a calendar, as well as other associated PIM information (i.e., reminders, contact information, etc.) to either the user themself or to another person. The distribution of the calendar may be a one time event or may occur at a regular interval selected by the user.

At block 1400 of Figure 14, a user selects a calendar to distribute. The user may select their personal calendar or a group calendar for which the user is a member as well as any associated PIM information such as reminders, contacts, to dos, etc. At block 1402, the user identifies the method of distribution as well as the recipient of the distributed calendar. The calendar may be distributed using a number of methods, for example, E-mail over the Internet, voice mail or facsimile. The user will provide an address for the recipient which is appropriate for the method of distribution (i.e., E-mail address, phone or facsimile number).

At block 1404, the user selects a date range for the distributed calendar. The date range determines the events which will be included in the distributed calendar. For example, the user could select to view the daily events in their calendar. At block 1406, the user selects the distribution interval for the calendar. For example, the user may choose to have their daily personal calendar E-mailed to them every morning. The calendar is sent as well as other associated information such as reminders and contact lists as selected by the user. The selected calendar may be distributed via E-mail over the Internet. The E-mail message includes an HTML page which has the calendar and other PIM information.

Events from the event lists associated with the selected calendar which fall within the specified date range are identified at block 1408. As discussed above with respect to Figure 12 and 13, each event record in an event list contains the first and last occurrence for the event. These dates are used to determine if an event qualifies to be included in the distributed calendar. If an event list does not include a qualifying event at block 1410, the process moves to the next event list associated with the selected calendar. If an event list does contain at least one qualifying event at block 1410, then the details of each qualifying event, in particular the first and last occurrence of the event, are used to calculate when each qualifying event occurs during the date range at block 1412. The qualifying events are then stored in a database at block 1414.

Once all the qualifying events for the distributed calendar are identified, a display for the distributed calendar is generated at block 1416. As mentioned above, in one embodiment, the distributed calendar is sent via E-mail over the Internet. The calendar may also be sent by other methods such as, for example, facsimile and voicemail.

Returning to Figure 2, when a remote user 200 accesses the system on the host computers 204, the PIM and calendar content database is accessed to provide data relevant to the user's request. Typically, the remote user 200 has a Web browser which is in communication with the host computers (or Web servers) 204 over the Internet 202. As data requests are made by the user, the servers 204 send queries to the PIM and calendar content database 206. The PIM and calendar content database 206 then returns the data requested to the Web server 204. The requested data may then be viewed by user 200 through their Web browser.

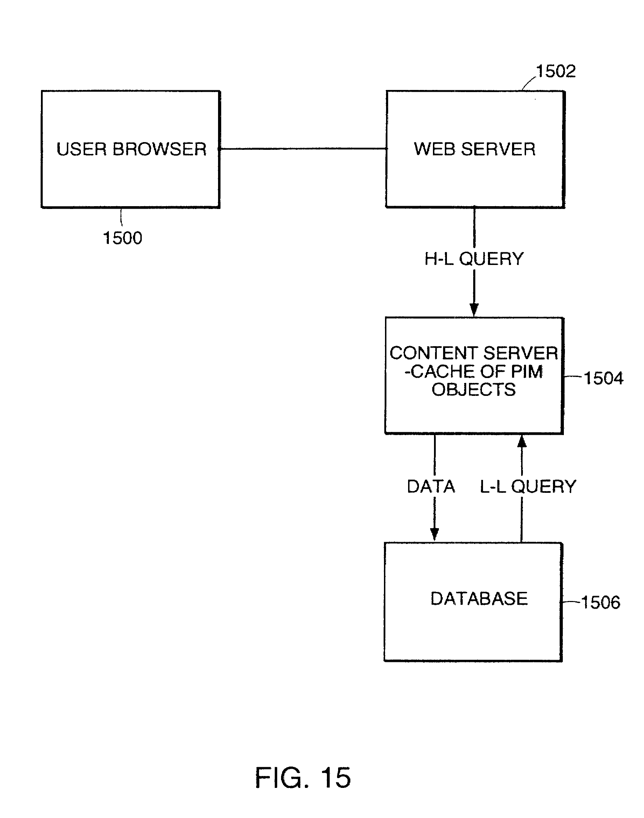

Figure 15 is a block diagram of a system for data access for the embodiment of Figs. 1a and 1b and Figure 2. When a user first accesses the system, or performs any of the functions described above, data access of the information stored in database 1506 is required. In Figure 15, a user browser 1500 is in communication with a Web server 1502 over the Internet. The system of Figure 15 includes a database 1506 which stores, among other things, the PIM and calendar content information. Database 1506 may also store information such as user account information.

When a user makes a data request, the Web server 1502 makes a high-level query to a content server 1504. Content server 1504 advantageously includes a cache of PIM objects such as events, calendars, addresses, etc. Typically, the information stored is the information most frequently requested or accessed by the user. If the requested data is not found in the cache of the content server 1504, then the content server 1504 makes a low level query to database 1506. Database 1506 then returns the data to content server 1504 which returns the data to the Web server 1502. If the data requested by the user is found in the cache of content server 1504, then content server 1504 returns the data to the Web server 1502.

The use of content server 1504 advantageously enables the system to perform demographics tracking (i.e. what types of information a user is interested in). The system of Figure 15 tracks the actions a user usually takes in the system and store the data relevant to these actions in the content server. Therefore, when the user requests this information, it is available from the content server. In one embodiment, the content server 1404 may be used to present a user with the screen or Web page the user typically accesses first when they enter the system. For example, if a user typically looks at the monthly view of their personal calendar when they enter the system, the content server can store this information and present the user with the monthly view automatically when the user logs-in to the system. In this manner, the content server 1404 allows the system to monitor the calendar and PIM information access patterns of users.

Although various exemplary embodiments of the invention have been disclosed, it should be apparent to those skilled in the art that various changes and modifications can be made which will achieve some of the advantages of the invention without departing from the true scope of the invention. These and other obvious modifications are intended to be covered by the appended claims.

## Claims

1. A method for establishing an event using an invitation in a personal information management system implemented over a network, the personal information management system including a calendar, the method comprising:
selecting an invitation template from a set of invitation templates, the set of invitation templates including at least one member;
specifying the content of the invitation, the content of the invitation including a set of details for the event and a set of invitees to the event;
hosting on a computer-based facility having a digital storage medium the selected invitation template and specified content of the invitation;
creating the invitation by retrieving from the computer based facility the selected invitation template and specified content of the invitation and placing the specified content in the invitation template; and
sending the invitation to each invitee in the set of invitees;
wherein the set of templates includes at least one template created by a first user and provided to the computer-based facility.

2. A method according to claim 1, further including:
receiving a response from at least one invitee from the set of invitees; and
storing the response in the digital storage medium.

3. A method according to claim 1, wherein the network is the Internet.

4. A method according to claim 1, wherein the computer-based facility includes a web server.

5. A method according to claim 1, wherein the set of details for the event includes a date and time for the event, a location for the event and a description for the event.

6. A method according to claim 1, wherein the set of invitees includes an E-mail address for each invitee.

7. A method according to claim 6, wherein sending the invitation to each invitee includes sending the invitation via E-mail over the Internet.

8. A method according to claim 1, further including placing the details of the event in the calendar of the personal information management system.

9. A system for establishing an event using an invitation in a personal information management system implemented over a network, the personal information management system including a calendar, the system comprising:
a first process running on a host computer, in communication with a remote computer over the network, the first process for selecting an invitation template from a set of invitation templates;
a second process, running on the host computer, for specifying the content of the invitation, the content of the invitation including a set of details for the event and a set of invitees to the event;
a digital storage medium, in communication with the host computer, the digital storage medium receiving and storing the specified content of the invitation and the selected invitation template;
a third process, running on the host computer, for creating the invitation by retrieving the selected invitation template and specified content of the invitation and placing the specified content in the invitation template; and
a fourth process for sending the invitation to each invitee in the set of invitees;
wherein the set of templates includes at least one template created by a first user on the remote computer and provided to the host computer from the remote computer over the network.

10. A system according to claim 9, further including:
a fifth process, running on the host computer, for receiving a response from at least one invitee from the set of invitees; and
a sixth process, running on the host computer, for storing the response in the digital storage medium.

11. A system according to claim 9, wherein the network is the Internet.

12. A system according to claim 9, wherein the host computer is a World Wide Web server.

13. A system according to claim 9, wherein the set of details for the invents includes a date and time for the event, a location for the event and a description of the event.

14. A system according to claim 9, wherein the set of invitees includes an E-mail address for each invitee.

15. A system according to claim 14 wherein the fourth process includes sending the invitation via E-mail over the Internet.

16. A system according to claim 9, further including a seventh process, running on the host computer, for placing the details of the event in the calendar of the personal information management system.

17. A method for conducting a survey over a network using a personal information management system, the personal information management system including a calendar, the method comprising:
specifying the content of the survey, the content of the survey including a set of questions including at least one member and a set of invitees including at least one member;
hosting on a computer based facility having a digital storage medium the specified content of the survey;
creating the survey by retrieving from the computer based facility the specified content of the survey and placing the content of the survey in predetermined sections of a survey template;
sending the survey to each invitee in the set of invitees; and
receiving a response from at least one invitee from the set of invitees and storing the response in the digital storage medium.

18. A method according to claim 17, wherein the network is the Internet.

19. A method according to claim 17, wherein the computer-based facility includes a web server.

20. A method according to claim 17, wherein the set of invitees includes an E-mail address for each invitee.

21. A method according to claim 20, wherein sending the survey to each invitee includes sending the survey via E-mail over the Internet.

22. A method according to claim 21, wherein the E-mail includes a link to a World Wide Web page which includes the survey.

23. A system for conducting a survey over a network using a personal information management system, the personal information management system including a calendar, the system comprising:
a first process running on a host computer, in communication with a remote computer over the network, the first process for specifying the content of the survey, the content of the survey including a set of question including at least one member and a set of invitees including at least one member;
a digital storage medium, in communication with the host computer, the digital storage medium receiving and storing the specified content of the survey;
a second process, running on the host computer, for creating the survey by retrieving the specified content of the survey and placing the specified content in predetermined sections of a survey template;
a third process, running on the host computer, for sending the survey to each invitee in the set of invitees; and
a fourth process, running on the host computer, for receiving a response from at least on invitees from the set of invitees and storing the response in the digital storage medium.

24. A system according to claim 23, wherein the network is the Internet.

25. A system according to claim 23, wherein the host computer is a World Wide Web server.

26. A system according to claim 23, wherein the set of invitees includes an E-mail address for each invitee.

27. A system according to claim 26, wherein sending the survey to each invitee includes sending the survey via E-mail over the Internet.

28. A system according to claim 27, wherein the E-mail includes a link to a World Wide Web page which includes the survey.

29. A method for creating a merged calendar using a base calendar and a first candidate calendar from a personal information management system implemented over a network, the base calendar including a first set of events and the first candidate calendar including a second set of events, the method comprising:
specifying a date range for the merged calendar;
determining a set of qualifying events from the second set of events, each qualifying event in the set of qualifying events occurring at least once within the specified date range;
storing, in a digital storage medium, the set of qualifying events and the first set of events of the base calendar; and
generating a display for the merged calendar, the display containing the first set of events from the base calendar and the set of qualifying events from the first candidate calendar.

30. A method according to claim 29, wherein the network is the Internet

31. A method according to claim 29, wherein the second set of events includes a first and last occurrence for each event.

32. A method according to claim 31, wherein determining a set of qualifying events includes identifying a qualifying event using the first and last occurrence for each event.

33. A method according to claim 29, further including normalizing the time zones of each event in the set of qualifying events.

34. A system for creating a merged calendar using a base calendar and a first candidate calendar from a personal information management system implemented over a network, the base calendar having a first set of events and the first candidate calendar having a second set of events, the system comprising:
a first process running on a host computer, in communication with a remote computer over the network, the first process for specifying a date range for the merged calendar;
a second process, running on the host computer for determining a set of qualifying events from the second set of events, each qualifying event in the set of qualifying events occurring at least once within the specified date range;
a digital storage medium in communication with the host computer, the digital storage medium receiving and storing the set of qualifying events and the first set of events of the base calendar; and
a fourth process, running on the host computer, for generating a display for the merged calendar, the display containing the first set of events from the base calendar and the set of qualifying events from the first candidate calendar.

35. A system according to claim 34, wherein the network is the Internet.

36. A system according to claim 34, wherein the host computer is a World Wide Web server.

37. A system according to claim 34, wherein the second set of events includes a first and last occurrence for each event.

38. A system according to claim 37, wherein determining a set of qualifying events includes identifying a qualifying event using the first and last occurrence for each event.

39. A system according to claim 34, further including normalizing the time zones of each event in the set of qualifying events.

40. A method for providing a published user calendar for viewing by a set of invitees in a personal information management system having a set of user calendars and implemented over a network, the method comprising:
selecting a user calendar from the set of user calendars, the user calendar having a set of events;
specifying a date range for the published user calendar;
determining a set of qualifying events from the set of events; each qualifying events in the set of qualifying events occurring at least one during the specified date range;
storing, in a digital storage medium, the set of qualifying events; and
generating a display for the published user calendar, the published user calendar including the set of qualifying events.

41. A method according to claim 40, further including:
generating a location address for the display of the published user calendar on the network; and
sending the location address to the set of invitees.

42. A method according to claim 40, wherein the network is the Internet.

43. A method according to claim 41, wherein the set of invitees includes an E-mail address for each invitee.

44. A method according to claim 43, wherein sending the location address to the set of invitees is done via E-mail over the Internet.

45. A method according to claim 41, wherein the user calendar is located on a World Wide Web page and the location address is a URL.

46. A method according to claim 40, wherein the set of invitees includes both users and non-users of the personal information management system.

47. A method for distributing a user calendar from a personal information management system having a set of user calendars and implemented over a network, the user calendar having a set of events, the method comprising:
specifying a date range for the distributed user calendar;
specifying a distribution interval, the distribution interval defining the frequency of distribution of the distributed user calendar;
determining a set of qualifying events from the set of events, each qualifying events in the set of qualifying events occurring at least once during the specified date range;
storing, in a digital storage medium, the set of qualifying events and the specified distribution interval; and
distributing the user calendar including the set of qualifying events according to the distribution interval.

48. A method according to claim 47, wherein the network is the Internet.

49. A method according to claim 47, wherein the user calendar is distributed by one of the group consisting of E-mail and facsimile.

50. A system for accessing data for a personal information manager, the system comprising:
a remote computer, in communication with the network, the remote computer running a first process for accessing the personal information manager by a user;
a host computer, in communication with the remote computer over the network, the host computer running a process for implementing the personal information manager;
a digital storage medium, in communication with the host computer, the digital storage medium for receiving and storing data for the personal information manager;
a content server, in communication with the host computer and the digital storage medium, the content server for retrieving and storing data from the digital storage medium for access by the host computer;
wherein the content server stores data most frequently accessed by the user.

51. A system according to claim 50, wherein the network is the Internet.

52. A system according to claim 50, wherein the first process is a World Wide Web browser.

53. A system according to claim 50, wherein the host computer is a World Wide Web server.
